# EUROPÄISCHE PATENTSCHRIFT

(11) **EP 1 059 808 B1**
(45) Veröffentlichungstag und Bekanntmachung des Hinweises auf die Patenterteilung: **02.03.2005**
(21) Anmeldenummer: 00111739.9
(22) Anmeldetag: 02.06.2000
(51) Int. Cl.: H04N 5/445

(54) **Fernsehempfänger mit menuegeführter Grundeinstellung**
Television receiver with basic setting controlled by menu
Récepteur de télévision avec réglage de base commandé par menu

(30) Priorität: 10.06.1999 DE 19926361
(43) Veröffentlichungstag der Anmeldung: 13.12.2000
(73) Patentinhaber: Grundig Multimedia B.V., 1083HJ Amsterdam (NL)
(72) Erfinder: Payer, Wolfgang, Grundig AG, 90762 Fürth (DE); Lehrmann, Holger, Grundig AG, 90762 Fürth (DE)
(74) Vertreter: Pröll, Jürgen

(56) Entgegenhaltungen:
- EP-A- 0 458 344
- EP-A- 0 535 749
- EP-A- 0 658 048
- US-A- 5 822 123
- KINGHORN J R: "ENHANCED ON-SCREEN DISPLAYS FOR SIMPLER TV CONTROL" IEEE TRANSACTIONS ON CONSUMER ELECTRONICS, IEEE INC. NEW YORK, US, Bd. 38, Nr. 3, 1. August 1992 (1992-08-01), Seiten 725-733, XP000311917 ISSN: 0098-3063
- "INTELLIGENTE BEDIENUNG VON TV-GERAETEN" FUNKSCHAU, FRANZIS-VERLAG K.G. MUNCHEN, DE, Bd. 68, Nr. 18, 16. August 1996 (1996-08-16), Seiten 66-69, XP000631188 ISSN: 0016-2841
- MALCHER D ET AL: "TV-MULTIMEDIA-PC ARBEITEN, INFORMIEREN UND UNTERHALTEN OHNE GRENZEN" FERNSEH UND KINOTECHNIK, VDE VERLAG GMBH. BERLIN, DE, Bd. 50, Nr. 3, 1. März 1996 (1996-03-01), Seiten 104-109, XP000581419 ISSN: 0015-0142
- DREYER K: "TV-KARTEN RICHTIG EINGEBAUT" FUNKSCHAU, FRANZIS-VERLAG K.G. MUNCHEN, DE, Bd. 68, Nr. 4, 2. Februar 1996 (1996-02-02), Seiten 62-65, XP000553424 ISSN: 0016-2841

## Beschreibung

Die Erfindung betrifft ein Fernsehempfangsgerät mit einem Zentralprozessor, einem nichtflüchtigen Speicher für Benutzerführungsdaten, einer Bedieneinheit, die eine Geräteeinschalttaste aufweist, einem DOS-Baustein und einem Display, wobei der Zentralprozessor während des Gerätebetriebes in Abhängigkeit von einem eingegebenen Bedienbefehl den DOS-Baustein derart ansteuert, daß er an seinem Ausgang Benutzerführungsinformationen zur Verfügung stellt, die auf dem Display dargestellt werden.

Aus der EP-A1-0 057 914 ist bereits ein Videorecorder mit mehreren Bedienungselementen bekannt. Zur Vereinfachung der Bedienung dieses Videorecorders wird zwischen dem Recorder und dem Bedienenden über ein Wiedergabegerät, beispielsweise einen Fernsehempfänger, ein Dialog hergestellt. Das Wiedergabegerät gibt dem Bedienenden vom Videorecorder gelieferte Informationen darüber, welche Bedienung jeweils durchgeführt werden muß, daß eine Bedienung vom Recorder richtig verstanden und durchgeführt wurde, daß eine Bedienung falsch ist und wiederholt werden muß oder auch, daß im Videorecorder ein bestimmter Fehler vorliegt.

Weiterhin ist aus der EP-B1-0 149 735 ein Videorecorder bekannt, welcher Signalgeneratoren für Steuersignale aufweist. Diese bewirken bei einem angeschlossenen Fernseh-Wiedergabegerät Anzeigen. Der bekannte Videorecorder weist einen Speicher mit einem nichtflüchtigen Teil auf, in dem Daten für Service-Informationen gespeichert sind. Weiterhin ist eine Tastatur vorgesehen, durch die eine Service-Stellung einschaltbar ist. Durch einen Mikroprozessor sind die im Speicher gespeicherten Daten im Servicebetrieb abrufbar. Die abgerufenen Daten werden mittels eines Daten-FBAS-Wandlers und/oder eines Spracherzeugers in Steuersignale umgewandelt.

Ferner sind bereits Fernsehempfänger bekannt, bei welchen nach dem ersten Einschalten ein automatischer Suchlauf zur Senderprogrammierung des Fernsehempfängers erfolgt.

Ausgehend von diesem Stand der Technik liegt der Erfindung die Aufgabe zugrunde, ein Fernsehempfangsgerät mit den im Oberbegriff des Anspruchs 1 angegebenen Merkmalen derart weiterzubilden, daß die Inbetriebnahme des Gerätes für den Kunden erleichtert ist.

Diese Aufgabe wird durch ein Fernsehempfangsgerät mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß der Kunde im Rahmen der allerersten Inbetriebnahme des Gerätes nicht unter Zuhilfenahme der Bedienungsanleitung des Gerätes und eigener Kenntnisse oder durch Ausprobieren Einstellungen vornehmen muß, die die Konfiguration integrierter oder externer Gerätemodule betreffen, d. h. das Zusammenarbeiten des Fernsehempfangsgerätes mit diesen Modulen. Derartige interne Gerätemodule sind beispielsweise ein Satellitensignalempfangsmodul, ein Tonsignalempfangsmodul, ein Modul zur automatischen Bildformaterkennung, ein Videorecordermodul, ein Signalentschlüsselungsmodul, ein DVD-Modul, ein DVB-Modul, ein EPG-Modul (Electronic Program Guide) und/oder ein VGA-Baustein. Bei externen Gerätemodulen kann es sich um einen Videorecorder, einen DVD-Spieler, eine Web-Box. etc., handeln. Erkennt der Zentralprozessor des Fernsehempfangsgerätes, daß nach der ersten Inbetriebnahme des Gerätes die Grundeinstellung desselben auf vorhandene Gerätemodule noch nicht erfolgt ist, dann schaltet er das Gerät automatisch in eine Grundeinstellungsbetriebsart, in welcher der Benutzer die notwendigen Grundeinstellungen menuegeführt vornehmen kann. Die Zuhilfenahme einer Bedienungsanleitung oder mühsames, oft vergebliches Ausprobieren ist dabei nicht mehr notwendig.

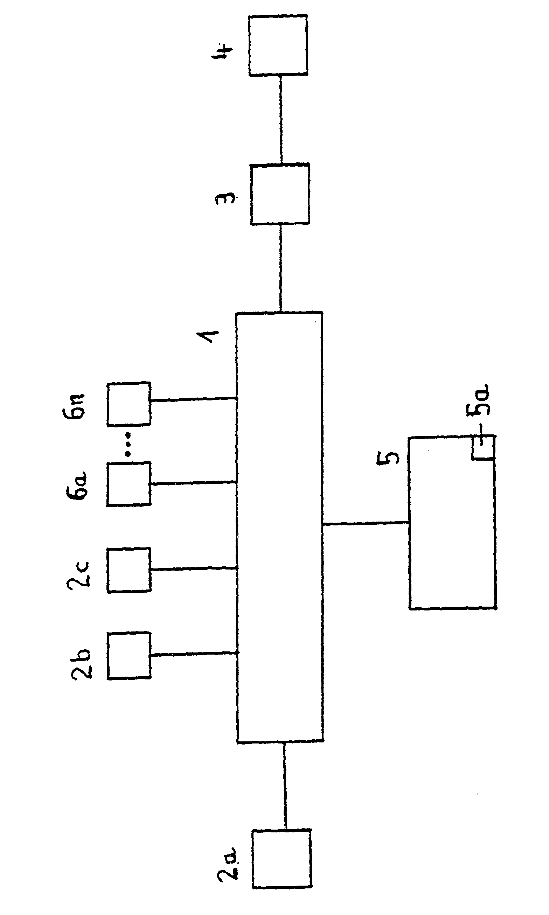

Weitere vorteilhafte Eigenschaften der Erfindung ergeben sich aus der Erläuterung eines Ausführungsbeispiels anhand der Figur. Diese zeigt die zum Verständnis der Erfindung notwendigen Baugruppen eines Fernsehempfangsgerätes in Form eines Blockschaltbildes.

Ein Fernsehempfangsgerät gemäß der Erfindung weist einen Zentralprozessor 1 auf. Dieser ist mit einem Benutzerführungsdatenspeicher 2a, einem Kennsignalspeicher 2b, einem Belegungszustandsspeicher 2c, einem DOS-Baustein 3 (display-on-screen), einer Bedienheinheit 5 und mehreren Belegungsdetektoren 6a, ..., 6n verbunden. Der DOS-Baustein 3 ist ausgangsseitig an einen Bildschirm 4 angeschlossen, auf welchem Fernsehprogrammsignale und Benutzerführungsinformationen dargestellt werden können.

Die Bedieneinheit 5 weist eine Einschalttaste 5a auf, welche zur Eingabe eines Geräteeinschaltbefehls vorgesehen ist. Wird ein derartiger Geräteeinschaltbefehl eingegeben, dann überprüft der Zentralprozessor 1 automatisch den Kennsignalspeicher 2b daraufhin, ob dort ein Grundeinstellungs-Vollzugssignal abgespeichert ist oder nicht. Bei diesem Grundeinstellungs-Vollzugssignal kann es sich um ein Kennbit handeln.

Ist im Kennsignalspeicher 2b bereits ein derartiges Grundeinstellungs-Vollzugssignal abgespeichert, dann bedeutet dies, daß die Grundeinstellung des Fernsehempfangsgerätes im Hinblick auf interne und externe Gerätemodule bereits erfolgt ist. In diesem Fall schaltet der Zentralprozessor 1 das Gerät automatisch in die Fernsehbetriebsart, in welcher beispielsweise zunächst stets dem Programmplatz 1 zugehörige Fernsehsignale am Bildschirm 4 dargestellt werden.

Ist hingegen im Kennsignalspeicher 2b noch kein derartiges Grundeinstellungs-Vollzugssignal abgespeichert, dann bedeutet dies, daß die Grundeinstellung des Fernsehempfangsgerätes im Hinblick auf interne und externe Gerätemodule noch nicht erfolgt ist. Dies ist regelmäßig dann der Fall, wenn in der Wohnung eines Endkunden ein neu aufgestelltes Fernsehempfangsgerät vom Fachhändler oder dem Endkunden selbst erstmals in Betrieb genommen werden soll. In diesem Fall schaltet der Zentralprozessor 1 das Fernsehempfangsgerät nach dem Einschalten automatisch in die Grundeinstellungsbetriebsart, in weicher eine Grundeinstellung des Fernsehempfangsgerätes im Hinblick auf interne und externe Gerätemodule durchgeführt wird.

Bei diesen Grundeinstellungsvorgängen erfolgt ein vom Zentralprozessor 1 gesteuerter Benutzerführungsdialog, wobei der Zentralprozessor 1 auf Benutzerführungsdaten zurückgreift, die im Benutzerführungsdatenspeicher 2a abgespeichert sind.

Im Rahmen der Anmeldung von externen Gerätemodulen bzw. -geräten werden zunächst durch Auswertung von Belegungszustandssignalen, die von zugehörigen der Belegungsdetektoren 6a, ..., 6n automatisch abgefragt werden, angeschlossene Geräte, beispielsweise Videorecorder mit Megalogic-Funktion, automatisch erkannt und zusammen mit der zugehörigen Signalart registriert. Weiterhin wird im Rahmen des Benutzerführungsdialoges nach der Anzahl der weiterhin angeschlossenen Videorecorder gefragt und für jeden dieser Videorecorder die möglichen Signalarten, beispielsweise VHS, S-VHS, etc., dem Benutzer zur Auswahl angeboten. Ferner ist der jeweils zugehörige RGB-Platz zu bestimmen. Desweiteren werden beim Benutzerführungsdialog Fragen nach sonstigen externen Gerätemodulen wie DVD-Spieler, Photo-CD-Spieler, einer Web-Box, einem Satellitensignalempfänger, Decodern wie einem Premiere-Decoder oder einem Canal plus-Decoder gestellt und vom Benutzer mittels der Bedieneinheit 5 beantwortet.

Am Ende dieses externe Gerätemodule betreffenden Benutzerführungsdialoges werden gegebenenfalls vom Zentralprozessor 1 Anschlußvorschläge bezüglich dieser Gerätemodule erstellt und dem Benutzer auf dem Bildschirm 4 angezeigt.

Bezüglich interner Gerätemodule wird zunächst ebenfalls durch Auswertung von Belegungszustandssignalen, die von zugehörigen der Belegungsdetektoren 6a, ..., 6n automatisch abgefragt werden, der Istzustand detektiert, d. h. automatisch ermittelt, welche internen Gerätemodule in das Fernsehempfangsgerät eingesetzt sind. Integrierte Gerätemodule sind beispielsweise ein Dolby-Surround-Modul, ein Modul zur automatischen Bildsignal-Formaterkennung, ein integrierter Satellitenempfänger, usw. Zu jedem dieser Module wird dem Benutzer ein Einstellmenue angeboten und er wird dazu aufgefordert, die einzelnen Einstellungen nach den jeweiligen Erfordernissen vorzunehmen.

Beispielsweise werden zur Grundeinstellung eines Tonsignalmoduls Fragen bezüglich Lautsprecher-Anschlußmöglichkeiten, Lautsprechern, die der Kunde zur Verfügung hat und anschließen möchte, und gewünschten Toneffekten gestellt. Diese sind vom Kunden mittels der Bedieneinheit 5 zu beantworten. Weiterhin werden hierbei gegebenenfalls dem Kunden Anschlußvorschläge unterbreitet, Toneffekte demonstriert und zusätzliche Erläuterungen angezeigt.

Im Rahmen der Grundeinstellung eines integrierten Satellitenmoduls werden Fragen nach der Anzahl der empfangenen Satelliten und die Namen der Satelliten sowie Fragen bezüglich der LNC- und AFC-Einstellungen gestellt, die vom Benutzer mittels der Bedieneinheit 5 zu beantworten sind.

Eine Grundeinstellung des Fernsehempfangsgerätes bezüglich eines VGA-Moduls erfolgt nur dann, wenn der Anschluß eines Personal-Computers detektiert wird. Bei ungeeigneten Einstellungen der PC-Grafikkarte erfolgt eine vom Zentralprozessor 1 gesteuerte Anzeige eines Warnsignals auf dem Bildschirm 4 sowie eine Anzeige der unterstützten Einstellungen. Beim Vorliegen von korrekten PC-Einstellungen erfolgt ein Wechsel auf den VGA-AV-Platz und eine Aufforderung zur VGA-Geometrieeinstellung, wobei im Rahmen des Benutzerführungsdialoges jeder Abgleichpunkt zunächst erläutert und dann zum Abgleich angeboten wird.

In vorteilhafter Weise besteht für den Benutzer die Möglichkeit, die automatisch eingeleitete Grundeinstellungsbetriebsart durch eine Eingabe vorgegebener Bedienbefehle mittels der Bedieneinheit 5 abzubrechen bzw. zu übergehen und auch die Möglichkeit, im späteren Gerätebetrieb zu einem beliebigen Zeitpunkt die Grundeinstellungsbetriebsart zu aktivieren. Letzteres kann beispielsweise dann geschehen, wenn der Kunde ein neues externes Gerät erworben hat und an das Fernsehempfangsgerät anschließen möchte oder wenn er wegen eines Defektes ein an das Fernsehempfangsgerät angeschlossenes externes Gerät entfernen möchte.

Gemäß einer vorteilhaften Weiterbildung der Erfindung vergleicht der Zentralprozessor 1 nach jedem Einschalten des Gerätes die von den Belegungsdetektoren 6a, ..., 6n abgeleiteten Belegungszustandssignale mit den im Belegungszustandsspeicher 2a abgespeicherten Daten und schaltet beim Vorliegen von Abweichungen das Fernsehempfangsgerät automatisch in die Grundeinstellungsbetriebsart, wobei der Zentralprozessor 1 den DOS-Baustein 3 derart ansteuert, daß er an seinem Ausgang Benutzerinformationen zur Verfügung stellt, die die Grundeinstellung desjenigen Gerätemoduls betreffen, welches für die Belegungszustandsveränderung verantwortlich ist.

## Patentansprüche

1. Fernsehempfangsgerät, mit
- einem Zentralprozessor (1),
- einem nichtflüchtigen Speicher für Benutzerführungsdaten (2a),
- einer Bedieneinheit (5), die eine Geräteeinschalttaste (5a) aufweist,
- einem OSD-Baustein 3), und
- einem Display (4),
wobei der Zentralprozessor (1)
- während des Gerätebetriebes in Abhängigkeit von einem eingegebenen Bedienbefehl den OSD-Baustein (3) derart ansteuert, dass er an seinem Ausgang Benutzerführungsinformationen zur Verfügung stellt, die auf dem Display (4) dargestellt werden,
- einen Kennsignalspeicher (2b) aufweist, in welchem ein Grundeinstellungs-Vollzugssignal abspeicherbar ist, und
- derart programmiert ist, dass er nach einer Geräteeinschaltung mittels der Geräteeinschalttaste (5a) den Inhalt des Kennsignalspeichers (2b) abfragt, bei abgespeichertem Grundeinstellungs-Vollzugssignal das Gerät in die Fernsehbetriebsart und bei nicht abgespeichertem Grundeinstellungs-Vollzugssignal das Gerät automatisch in eine Grundeinstellungsbetriebsart schaltet,
- in der Grundeinstellungsbetriebsart den OSD-Baustein (3) derart ansteuert, dass er an seinem Ausgang Benutzerführungsinformationen zur Verfügung stellt, die auf dem Display (4) dargestellt werden,
wobei das Fernsehempfangsgerät mehrere Gerätemodule aufweist und der Zentralprozessor (1) in der Grundeinstellungsbetriebsart den OSD-Baustein derart ansteuert, dass er an seinem Ausgang Benutzerführungsinformationen zur Verfügung stellt, welche die Grundeinstellung eines der Gerätemodule betreffen und der Zentralprozessor (1) derart programmiert ist, dass die Grundeinstellung der Gerätemodule schrittweise nacheinander und automatisch erfolgt.
**dadurch gekennzeichnet,**
**dass** das Fernsehempfangsgerät Belegungsdetektoren (6a, ..., 6n) für die Gerätemodule aufweist, die vom Zentralprozessor (1) zur Abfrage des Belegungszustandes abfragbar sind, dass es einen nichtflüchtigen Belegungszustandsspeicher (2c) aufweist, in welchem gerätemodulspezifische Belegungszustandssignale abspeicherbar sind, dass der Zentralprozessor (1) derart programmiert ist, dass er nach einer Geräteeinschaltung mittels der Geräteeinschalttaste (5a) automatisch die Belegungsdetektoren (6a, ..., 6n) zur Abfrage des Belegungszustandes ansteuert, die Belegungsdetektorausgangssignale mit den abgespeicherten Belegungszustandssignalen vergleicht und bei fehlender Übereinstimmung den OSD-Baustein (3) derart ansteuert, dass er an seinem Ausgang Benutzerführungsinformationen zur Verfügung stellt, die die Grundeinstellung desjenigen Gerätemoduls betreffen, welches für die Belegungszustandsveränderung verantwortlich ist.

2. Fernsehempfangsgerät nach Anspruch 1,
**dadurch gekennzeichnet,**
**dass** die Gerätemodule im Gehäuse des Fernsehempfangsgerätes vorgesehene Gerätemodule sind.

3. Fernsehempfangsgerät nach Anspruch 2,
**dadurch gekennzeichnet,**
**dass** die Gerätemodule ein Satellitensignalempfangsmodul, ein Tonsignalempfangsmodul, ein Modul zur automatischen Bildformaterkennung, ein Videorecordermodul, ein Signalentschlüsselungsmodul, ein DVD-Modul, ein DVB-Modul, ein EPG-Modul und/oder ein VGA-Baustein sind.

4. Fernsehempfangsgerät nach einem der vorhergehenden Ansprüche,
**dadurch gekennzeichnet,**
**dass** mittels der Bedieneinheit (5) ein Bedienbefehl eingebbar ist, aufgrund dessen der Zentralprozessor (1) das Gerät in die Grundeinstellungsbetriebsart schaltet.

## Claims

1. Television receiving set, comprising
- a central processor (1),
- a non-volatile memory for user prompting data (2a),
- an operating unit (5) having a set switch-on key (5a),
- a DOS chip (3), and
- a display (4),
wherein the central processor (1)
- activates the DOS chip (3) as a function of an inputted operating command during operation of the set in such a way that it makes available at its output user prompting information items that are displayed on the display (4),
- has an identification-signal memory (2b) in which a basic-setting execution signal can be stored and
- is programmed in such a way that, after the set is switched on by means of the set switch-on key (5a), it scans the content of the identification-signal memory (2b) and, if a basic-setting execution signal is stored, it switches the set to the television operating mode and if a basic-setting execution signal is not stored, it automatically switches the set to a basic-setting operating mode,
- in the basic-setting operating mode, it activates the DOS chip (3) in such a way that it makes available at its output user prompting information items that are displayed on the display (4),
wherein the television receiving set has a plurality of set modules and, in the basic-setting operating mode, the central processor (1) activates the DOS chip in such a way that it makes available at its output user prompting information items that relate to the basic setting of one of the set modules and the central processor (1) is programmed in such a way that the basic setting of the set modules automatically takes place in steps one after the other,
**characterized in that**
the television receiving set has occupation detectors (6a, ..., 6n) for the set modules that can be scanned by the central processor (1) in order to scan the occupation state, **in that** it has a non-volatile occupation-state memory (2c) in which set-module-specific occupation-state signals can be stored, **in that** the central processor (1) is programmed in such a way that, after the set is switched on by means of the set switch-on key (5a), it automatically activates the occupation-state detectors (6a, ..., 6n) to scan the occupation state, it compares the occupation-state detector output signals with the stored occupation-state signals and, if there is not a match, it activates the DOS chip (3) in such a way that it makes available at its output user prompting information items relating to the basic setting of that set module that is responsible for altering the occupation state.

2. Television receiving set according to Claim 1,
**characterized in that**
the set modules are provided in the cabinet of the television receiving set.

3. Television receiving set according to Claim 2,
**characterized in that**
the set modules are a satellite-signal reception module, an audio-signal reception module, a module for automatically identifying picture format, a video recorder module, a signal deciphering module, a DVD module, a DVB module, an EPG module and/or a VGA chip.

4. Television receiving set according to any one of the preceding claims,
**characterized in that**
an operating command on the basis of which the central processor (1) switches the set to the basic-setting operating mode can be inputted by means of the operating unit (5).

## Revendications

1. Récepteur de télévision équipé
- d'un processeur central (1),
- d'une mémoire non volatile pour les données d'aide en ligne (2a),
- d'une unité de commande (5), qui présente une touche de mise en marche (5a),
- d'un composant DOS (3), et
- d'un affichage (4),
où le processeur central (1)
- commande le composant OSD (3) pendant le fonctionnement de l'appareil en fonction d'un ordre de commande envoyé de sorte qu'il met à disposition à sa sortie des informations d'aide en ligne, qui sont affichées sur l'écran (4),
- présente une mémoire de signal d'identification (2b), dans laquelle un signal d'exécution de réglage de base peut être mémorisé, et
- est programmé de sorte qu'il consulte, après la mise en marche de l'appareil au moyen de la touche de mise en marche de l'appareil (5a), le contenu de la mémoire de signal d'identification (2b), lors du signal d'exécution de réglage de base mémorisé, l'appareil commute en mode télévision, et lors d'un signal d'exécution de réglage de base, l'appareil commute automatiquement en mode réglage de base,
- en mode réglage de base, commande le composant OSD (3) de sorte qu'il met à disposition des informations d'aide en ligne à sa sortie, qui sont affichées sur l'affichage (4),
dans lequel le récepteur de télévision présente plusieurs modules et le processeur central (1) commande, en mode réglage de base, le composant OSD de sorte qu'il met à disposition des informations d'aide en ligne à sa sortie, qui concernent le réglage de base d'un des modules et le processeur central (1) est programmé de sorte que le réglage de base des modules se produit automatiquement étape par étape l'un après l'autre,
**caractérisé en ce que**
le récepteur de télévision présente des détecteurs de disponibilité (6a,...,6n) pour les modules, qui peuvent être consultés par le processeur central (1) en vue de la consultation de l'état de disponibilité, **en ce qu'**il présente une mémoire d'état de disponibilité non volatile (2c), dans laquelle les signaux d'état de disponibilité spécifiques au module peuvent être mémorisés, **en ce que** le processeur central (1) est programmé de sorte qu'il commande, après la mise en marche au moyen de la touche de mise en marche de l'appareil (5a), automatiquement les détecteurs de disponibilité (6a, ..., 6n) en vue de la consultation de l'état de disponibilité, compare les signaux de sortie des détecteurs de disponibilité aux signaux d'état de disponibilité mémorisés et par manque de concordance, commande le composant OSD (3) de sorte qu'il met à disposition des informations d'aide en ligne à sa sortie, qui concernent le réglage de base de chaque module, qui est responsable du changement d'état de disponibilité.

2. Récepteur de télévision selon la revendication 1, **caractérisé en ce que** les modules sont des modules prévus dans le coffret du récepteur de télévision.

3. Récepteur de télévision selon la revendication 2, **caractérisé en ce que** les modules sont un module de réception de signaux satellite, un module de réception de signaux audio, un module en vue de la reconnaissance automatique du format d'image, un module de magnétoscope, un module de décodage de signaux, un module DVD, un module DVB, un module EPG et/ou un composant VGA.

4. Récepteur de télévision selon l'une des revendications précédentes, caractérisé en ce, au moyen d'une unité de commande (5), un ordre de commande peut être donné, en raison duquel le processeur central (1) commute l'appareil en mode réglage de base.
